# FASCICULE DE BREVET EUROPEEN

(11) **EP 1 146 807 B1**
(45) Date de publication et mention de la délivrance du brevet: **19.03.2003**
(21) Numéro de dépôt: 00900648.7
(22) Date de dépôt: 24.01.2000
(51) Int. Cl.: A47J 31/40

(54) **DISPOSITIF POUR L'EXTRACTION DE CAFE**
VORRICHTUNG ZUM EXTRAHIEREN VON KAFFEE
COFFEE EXTRACTING DEVICE

(30) Priorité: 28.01.1999 FR 9900995
(43) Date de publication de la demande: 24.10.2001
(73) Titulaire: COMPAGNIE MEDITERRANEENNE DES CAFES S.A., 06510 Carros (FR)
(72) Inventeur: BLANC, Jean-Pierre, Brevets Invention et Marques, 06000 Nice (FR); FERRIER, Christian, Brevets Invention et Marques, 06000 Nice (FR)
(74) Mandataire: Hautier, Jean-Louis
(86) Numéro de dépôt international: FR0000147
(87) Numéro de publication internationale: WO00044268

(56) Documents cités:
- EP-A- 0 867 142
- WO-A-95/07041
- WO-A-95/17121

## Description

La présente invention concerne un dispositif pour l'extraction de café. Ce dispositif est du type comportant une chambre d'extraction à alimentation par introduction verticale de pastilles ou de dosettes pré-dosées en café moulu.

L'invention trouvera particulièrement son application dans le domaine de la fabrication et de l'utilisation de machines pour la préparation de boissons au café de type expresso. Plus particulièrement, l'invention s'adresse aux machines utilisant des pastilles ou dosettes pré-dosées en café moulu.

Dans ce cadre, on connaît déjà des machines permettant l'extraction de café par simple introduction de dosettes ou de pastilles par l'utilisateur.

La demande de brevet WO-A-9507041 présente une machine à café express, formée de façon classique d'une chaudière et d'un vérin, lui-même composé d'un corps cylindrique renfermant un piston utilisant des pastilles de café ou autres. Elle est constituée de butées placées à une extrémité de la chaudière en position perpendiculaire par rapport à l'axe longitudinal de la machine à café express, le vérin coopérant avec ladite chaudière au niveau des butées pour fixer en position une pastille de café ou autres qui est fixée par sa pièce entre les butées, d'une part et la chaudière d'autre part.
On connaît également de la demande de brevet WO-A-95/17121 une machine automatique pour la préparation d'infusions de boissons chaudes telles que du café qui comprend un groupe formé d'un corps placé en regard d'un chaudière, destinés à être rapprochés l'un de l'autre pour former une chambre d'infusion.

Elle comporte, entre le corps et la chaudière, au niveau de la chambre d'infusion :
- des moyens de réception d'un conditionnement individuel contenant le produit à infuser, qui sont constitués d'au moins un élément escamotable, déployé en position sensiblement inférieure, destiné à immobiliser temporairement ledit conditionnement entre le corps et la chaudière,
- des moyens de maintien en position du conditionnement qui sont constitués de deux rainures latérales sensiblement verticales, dans lesquelles ledit conditionnement coulisse et est maintenu en position verticale lorsque les moyens de réception sont présents, et
- des moyens d'éjection automatique dudit conditionnement qui sont constitués d'élément escamotable qui est escamoté par rapport au passage du conditionnement individuel, pour permettre l'éjection par simple gravité du conditionnement individuel, le déplacement du conditionnement individuel étant perpendiculaire à l'axe de la machine.

On connaît aussi du document EP-A-0867142 une machine à café expresso qui s'utilise avec des capsules filtrantes et qui possède une unité d'infusion comportant deux parties de chambre d'infusion qui coulissent l'une par rapport à l'autre entre une position d'ouverture et une position de fermeture.

Ces machines, issues des travaux du demandeur, permettent l'utilisation de dosettes ou de pastilles pré-dosées en café moulu intégrées dans une chambre d'extraction (c'est-à-dire où on effectue l'extraction du café). Selon l'état de la technique, la chambre d'extraction est composée de deux éléments mobiles en translation horizontale afin de pouvoir se rapprocher ou s'éloigner l'un de l'autre pour ouvrir ou fermer la chambre d'extraction.

Bien qu'intéressantes, de telles machines ne donnent pas entière satisfaction.

En premier lieu, elles ont l'inconvénient d'être de conception relativement complexe. En effet, elles nécessitent l'utilisation d'un système de mise en translation lourd et coûteux (notamment par le biais de vérins). Elles nécessitent également l'utilisation de moyens aptes à être parfaitement ajustés pour effectuer des déplacements très précis des deux parties mobiles constituant la chambre.

Par conséquent, les machines actuelles ont un encombrement pouvant être nettement optimisé. Par ailleurs, leur conception est complexe ce qui induit des coûts de fabrication importants.

L'objet de la présente invention est de remédier à tels inconvénients en proposant une conception plus légère permettant notamment la mobilité des deux éléments composant la chambre d'extraction sans entraîner l'utilisation de moyens de déplacement lourds et coûteux.

Un des avantages de l'invention est de proposer un dispositif utilisant des moyens d'entraînement simples comportant une motorisation de faible puissance et ne posant pas de problèmes particuliers quant au réglage en position des déplacements à effectuer.

Un autre avantage de l'invention est de combiner, à partir d'une seule motorisation ou autre système d'entraînement une mobilité non seulement en translation mais aussi en oscillation des deux parties composant la chambre d'extraction.

Un autre objet du dispositif pour l'extraction de café ici présenté et de permettre plus de souplesse dans l'usage, le remplacement ou le dépannage du dispositif. Pour ce faire, il a l'avantage de comporter des éléments facilement démontables tels qu'un porte douchette ou un porte filtre susceptibles d'être facilement remplacés.

Un autre but de l'invention est d'autoriser une mise en place et un guidage optimaux de la pastille ou de la dosette pré-dosée en café moulu lors de ses étapes d'utilisation.

D'autres buts et avantages apparaîtront au cours de la description qui va suivre qui n'est cependant donnée qu'à titre indicatif.

La présente concerne un dispositif pour l'extraction de café, comportant une chambre d'extraction du type à alimentation par introduction verticale de pastilles ou dosettes pré-dosées en café moulu, ladite chambre d'extraction étant composée de deux parties mobiles dans un mouvement horizontal de manière à pouvoir s'écarter ou se rapprocher l'une de l'autre, l'une des parties mobiles comportant une entrée d'eau chaude, l'autre partie mobile étant dotée d'une évacuation du café extrait caractérisé par le fait que
- les parties mobiles sont montées chacune sur un arbre à excentrique apte à leur transmettre des mouvements oscillatoires de sens inverses,
- et qu'il comporte une liaison pivot freinée entre chaque arbre à excentrique et chaque partie mobile, afin de combiner un mouvement horizontal et un mouvement d'oscillation pour l'enchaînement des phases d'ouverture et de fermeture de la chambre d'extraction.

Le dispositif ici présenté pourra être réalisé suivant différents modes particuliers et notamment ceux énoncés ci-après.

Des surfaces de butée sur lesquelles les parties mobiles viennent en appui, permettent d'en limiter l'angle d'oscillation.

Des moyens de guidage de la dosette sont présents pour la maintenir sensiblement en position verticale.

Les moyens de guidage constituent également les surfaces de butée.

Les moyens de guidage sont formés de deux éléments rainurés verticalement pour coopérer avec la périphérie de la dosette et positionnés de part et d'autre des parties mobiles sensiblement au niveau de leur plan de contact.

La liaison pivot est freinée par un patin de friction porté par chaque partie mobile et s'appuyant élastiquement sur la périphérie de l'arbre.

Les surfaces de butée engendrent le mouvement relatif partie mobile/arbre à excentrique de la liaison pivot freinée afin de rapprocher les parties mobiles lorsqu'elles ont atteint leur déplacement angulaire maximal.

Les arbres à excentrique sont mus par des roues dentées engrénant et motorisées, aptes à transmettre aux parties mobiles des mouvements symétriques par rapport à leur plan de contact.

Les parties mobiles comportent chacune un support mobile monté sur l'arbre à excentrique et, l'une un porte douchette, l'autre un porte filtre, escamotables et montés sur le support mobile.

Le dispositif comprend au moins un capteur de position apte à déterminer la position angulaire des roues dentées.

Il comporte au moins un capteur de présence d'une pastille en position de chargement.

Partant d'une position angulaire maximale où la chambre d'extraction est ouverte vers le bas, les arbres à excentrique effectuent un déplacement angulaire permettant l'ouverture de la chambre d'extraction vers le haut pour l'introduction d'une dosette, les arbres à excentrique poursuivent leur déplacement angulaire pour la fermeture de la chambre d'extraction, les arbres à excentrique effectuent ensuite un déplacement angulaire de sens inverse pour ramener la chambre d'extraction en position ouverte vers le bas pour l'évacuation de la dosette usagée et l'attente du chargement d'une nouvelle dosette.

Les dessins ci-joints sont donnés à titre d'exemple indicatif et non limitatif. Ils représentent un mode de réalisation selon l'invention. Ils permettront de comprendre aisément l'invention.

La figure 1 est une vue d'ensemble du dispositif selon l'invention, vu de côté.

La figure 2 est une vue de dessus dans le mode de réalisation de la figure 1.

La figure 3 illustre un mode de réalisation de moyens de guidage.

Les figures 4 à 9 illustrent plusieurs phases successives de configuration de l'invention.

Les figures 10 et 11 illustrent les parties mobiles dans un mode particulier de réalisation.

Les figures 12 et 13 montrent la liaison pivot freinée dans un mode préféré.

Le dispositif 1 pour l'extraction de café ici présenté pourra s'intégrer dans une machine de type expresso utilisant des pastilles ou dosettes 18 pré-dosées. Notamment, une telle machine comportera des éléments courants tel qu'une chaudière ou encore une alimentation et un carénage.

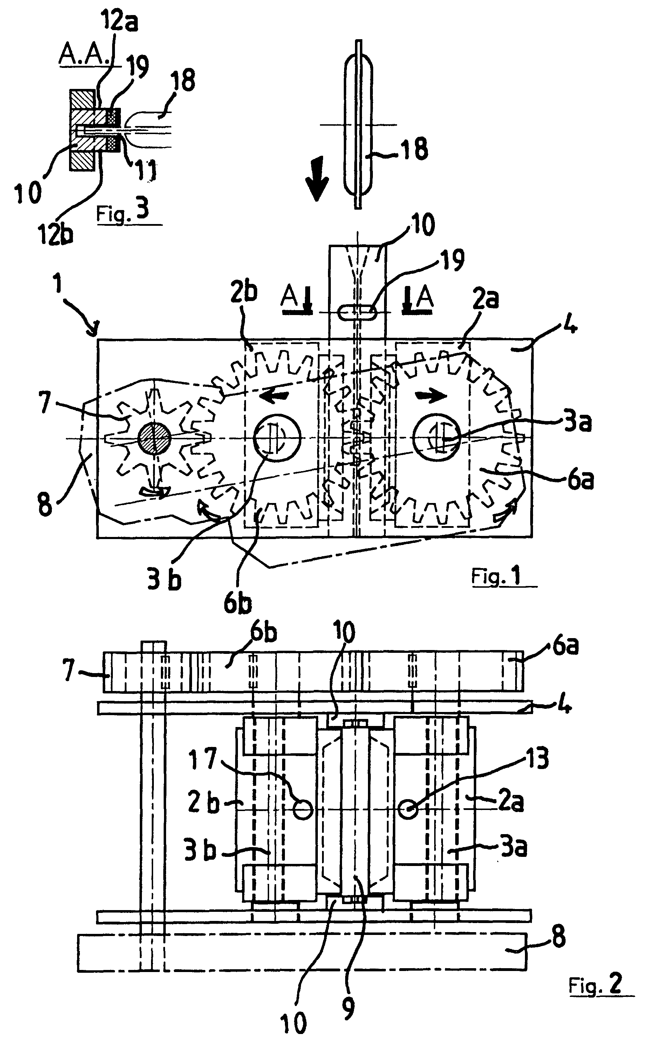

L'invention s'adresse particulièrement aux machines utilisant des pastilles ou dosettes pré-dosées en café moulu telles que représentées en figure 1 au repère 18.

Plus spécifiquement, on pourra utiliser, sans que cet exemple soit limitatif, des dosettes comportant un pourtour renforcé ou encore rigidifié tel que connu de la demande de brevet PCT/WO9507041.

Comme cela ressort également de la figure 1, le dispositif 1 pour l'extraction de café permet l'introduction de pastilles ou dosettes 18, par le dessus du dispositif 1.

Le dispositif 1 selon l'invention comporte une chambre d'extraction 16 qui est le volume dans lequel la dosette 18 est enfermée momentanément afin de réaliser la lixiviation forcée.

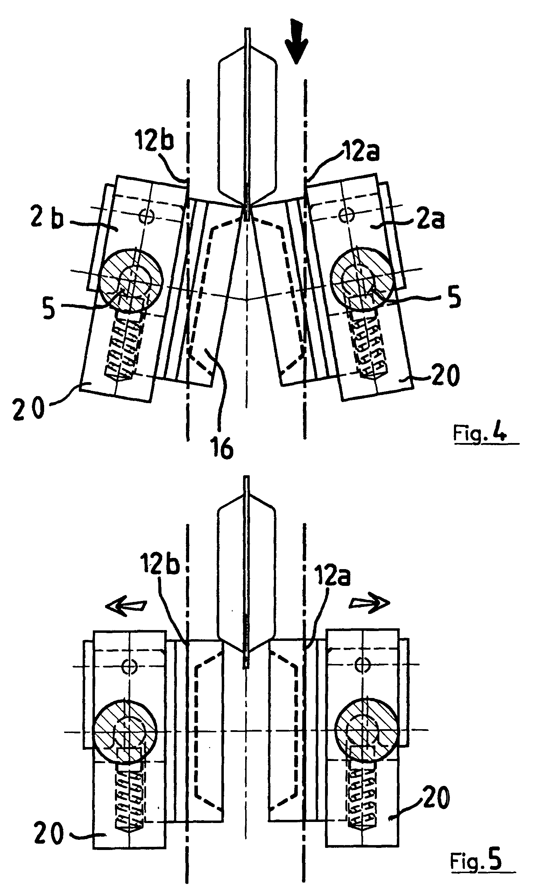

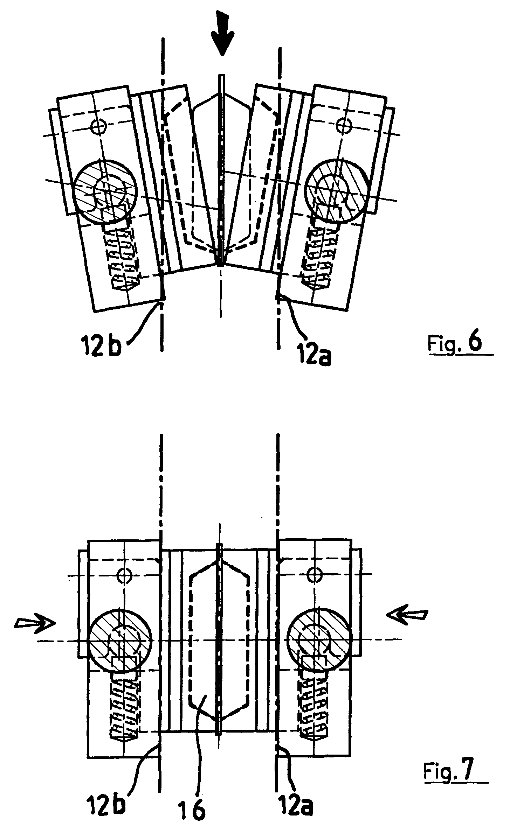

La chambre d'extraction 16 comme repérée aux figures 4 et 7 est composée de deux parties mobiles 2a et 2b.

L'une des parties mobiles 2a comporte une entrée d'eau chaude référencée 13. L'autre partie mobile comporte une évacuation du café 17. Cela est schématisé en figure 1.

Pour appliquer l'eau chaude sur la dosette 18, la partie mobile 2a comportera en outre une douchette représentée dans un mode particulier en figure 1 au repère 21. De même, pour permettre l'évacuation de la boisson au café réalisée, la partie mobile 2b comportera une partie filtre non représentée.

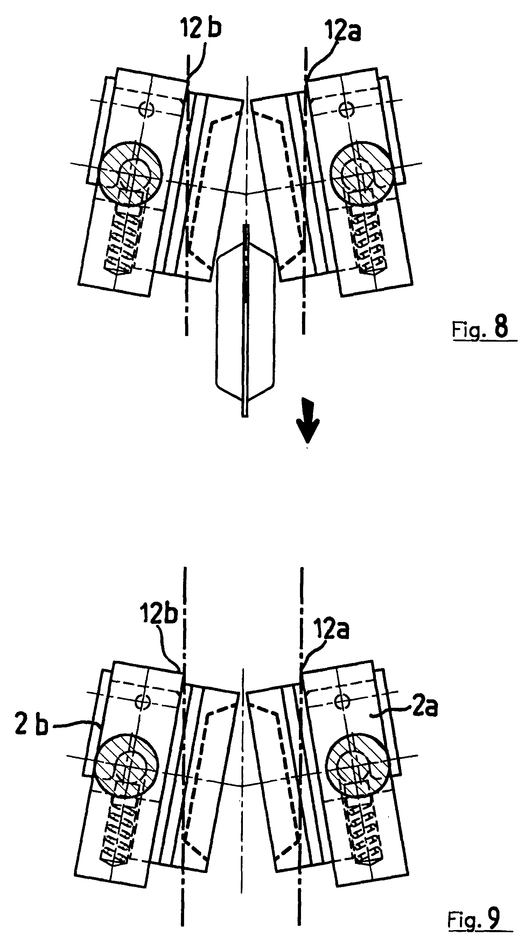

La chambre d'extraction 16 doit se présenter sous plusieurs configurations pour permettre les phases de fabrication du café. En effet, on distingue la phase de chargement de la dosette 18 au cours de laquelle celle-ci est introduite dans le volume intérieur de la chambre d'extraction 16. Cette phase est illustrée par les figures 5 et 6. Suit une phase de fermeture de la chambre d'extraction 16 permettant d'enfermer de façon étanche la dosette 18 pour procéder à l'extraction du café. Cela ressort de la figure 7. Enfin, une ouverture de la chambre d'extraction vers le bas est nécessaire pour procéder à l'évacuation de la dosette 18 usagée et permettre l'attente d'une nouvelle pastille 18 par le dessus du dispositif 1. Cette évacuation est montrée en figure 8.

Pour que la chambre d'extraction 16 puisse passer d'une configuration à l'autre, on utilise selon l'invention des parties mobiles 2a, 2b aptes à effectuer un déplacement non seulement dans un mouvement horizontal pour s'écarter ou se rapprocher l'une de l'autre mais aussi de façon oscillante.

De cette façon, on combine deux mouvements (un mouvement horizontal et un mouvement d'oscillation) et, de façon avantageuse, ces deux mouvements sont réalisés à partir d'une seule motorisation.

Pour réaliser une combinaison d'un mouvement d'oscillation et de translation horizontale, les parties mobiles 2a et 2b que comporte le dispositif 1 ont les caractéristiques suivantes.

D'une part, les parties mobiles 2a et 2b sont montées chacune sur un arbre à excentrique 3a, 3b, tel que représenté en figure 1 ou encore en figure 2 en vue de dessus.

Les arbres 3a, 3b permettent la transmission d'un mouvement d'oscillation aux deux parties mobiles 2a, 2b. Tel que représenté en figure 1 par les flèches, dans chaque cas, la transmission des mouvements s'effectue en sens inverse pour chacune des parties mobiles 2a, 2b. Préférentiellement, les mouvements des parties mobiles 2a, 2b sont symétriques par rapport à leur plan de contact 9, lorsque la chambre d'extraction 16 est en position fermée.

Le plan de contact 9 est un plan vertical apparaissant en vue de dessus en figure 2 selon les lignes en trait mixte.

Dans le mode particulier de réalisation illustré aux figures, les arbres excentriques 3a, 3b entraînent les parties mobiles 2a, 2b dans un mouvement de pivot par rapport à l'armature 4 du dispositif. Cette armature 4 se présente aux figures sous la forme de parois verticales entourant les éléments constitutifs du dispositif 1 mais cette configuration de l'armature 4 n'est pas limitative.

En plus de la mobilité en rotation ainsi réalisée, les parties mobiles 2a, 2b doivent être rapprochées ou éloignées suivants les phases de configuration de la chambre d'extraction 16.

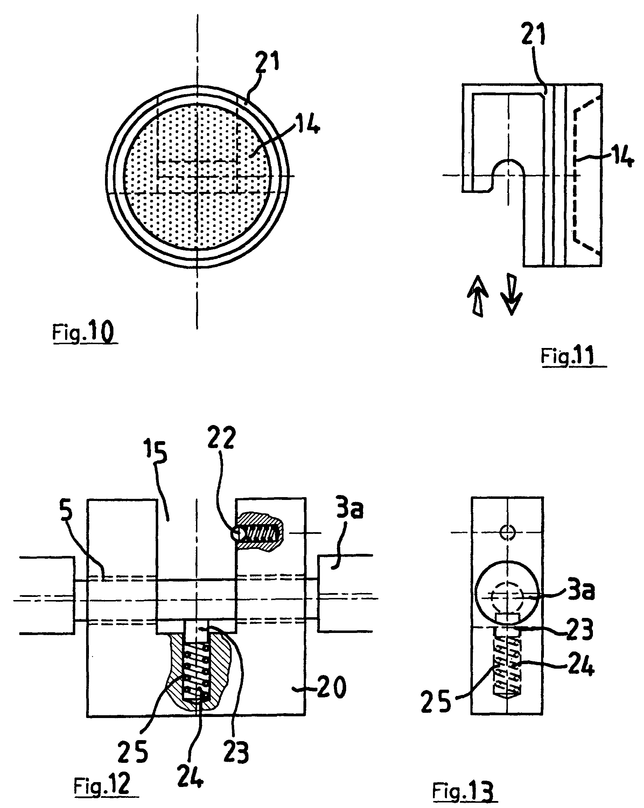

Pour réaliser ce mouvement horizontal, le dispositif 1 pour l'extraction de café selon l'invention comporte une liaison pivot 5 freinée. Cette liaison pivot 5 telle que représentée aux figures 4 et 12 est réalisée entre chaque arbre à excentrique 3a, 3b et chaque partie mobile 2a, 2b.

Selon l'invention, la liaison pivot 5 est freinée à savoir qu'il existe une résistance au mouvement de pivot relatif entre l'arbre à excentrique 3a, 3b et la partie mobile 2a, 2b. En effet, le mouvement de pivot relatif ne sera effectué que si la résistance imposée est forcée.

De cette façon, on peut distinguer deux cas particulier pour le fonctionnement de cette liaison pivot 5.

Dans un premier cas, le mouvement d'oscillation induit par les arbres à excentriques 3a, 3b n'est pas limité angulairement. Dans ce cas, seule l'oscillation se produit compte tenu qu'aucun effort ne permet de s'opposer au frein réalisé dans la liaison pivot 5.

Dans un deuxième cas, le mouvement d'oscillation induit par les arbres à excentriques 3a, 3b peut être bloqué, par exemple lorsque les deux parties mobiles 2a, 2b sont en butée angulaire entre elles ou sur une pièce mécanique, comme décrit plus loin.

Dans ce cadre, la liaison pivot 5 freinée peut alors fonctionner. On constate dans ce cas un rapprochement ou un éloignement des parties mobiles 2a, 2b par le biais de l'excentrique.

Comme indiqué précédemment, on pourra utiliser des moyens semblables pour la mise en mouvement des deux parties mobiles 2a, 2b. De cette façon, les mouvements opérés seront complètement symétriques vis à vis du plan de jonction des deux parties mobiles 2a, 2b. Seul le sens de leur mouvement sera inverse.

Dans un mode particulier de réalisation, le dispositif comprend des surfaces de butée 12a, 12b. Les surfaces de butée permettent de limiter l'angle d'oscillation des parties mobiles 2a, 2b qui viennent en appui sur ces surfaces 12a, 12b tel qu'illustré aux figures 4 à 9.

Dans un mode particulier de réalisation, les surfaces de butée 12a, 12b peuvent être portées ou constituées dans l'armature 4. Elles permettent une limitation de l'oscillation des parties mobiles 2a, 2b de façon à former soit une ouverture vers le bas de la chambre d'extraction 16, soit une ouverture vers le haut de la chambre 16.

Dans un mode particulier de réalisation, le dispositif présente des moyens de guidage 10 de la dosette 18 pour la maintenir sensiblement en position verticale.

On peut également profiter de la présence des moyens de guidage 10 pour constituer dans le même tenant les surfaces de butée 12a, 12b.

Dans ce cadre, on peut réaliser des moyens de guidage 10 tel que représenté aux figures 1 et 3. Sur ces figures, en effet, les moyens de guidage 10 sont constitués par des éléments rainurés verticalement pour coopérer avec la partie périphérique de la dosette 18. Ce mode de réalisation se place dans le cadre de l'utilisation de dosettes 18 comportant un pourtour renforcé ou rigidifié. Ce pourtour renforcé peut ainsi être inséré dans la rainure 11 tel que représenté en figure 3. On pourra utiliser des éléments rainurés formant les moyens de guidage 10 positionnés de part et d'autre des parties mobiles 2a, 2b sensiblement au niveau de leur plan de contact.

Deux éléments rainurés sont présentés en figure 2sous le repère 10. La figure 3 montre par ailleurs que les parties mobiles 2a, 2b viennent en appui sur les tranches de l'élément rainuré ; lesdites tranches constituant les surfaces de butée 12a, 12b.

Pour réaliser la liaison pivot 5 freinée, on pourra utiliser un patin de friction 23 porté par chaque partie mobile 2a, 2b. Tel qu'illustré, en figure 12, le patin de friction 23 s'appuie élastiquement sur la périphérie de l'arbre à excentrique 3a, 3b.

Pour réaliser l'appui élastique, on pourra mettre en oeuvre tel que représenté en figure 12 un ressort 24 et une cage de ressort 25 permettant l'appui élastique sur le patin de friction 23.

Bien entendu, la raideur du ressort 24 sera choisie pour être compatible avec la résistance que peut vaincre la motorisation mais également pour éviter tout déplacement parasite relatif de l'arbre à excentrique 3a, 3b et des parties mobiles 2a, 2b lors des mouvements d'oscillation pure.

Pour réaliser la mise en mouvement des parties mobiles 2a, 2b, on emploiera préférentiellement des roues dentées 6a, 6b engrenant. Tel que représenté en figure 1, ces roues dentées 6a, 6b peuvent être mises en rotation par une motorisation 8 par l'intermédiaire d'un engrenage 7. On utilisera une motorisation 8 d'un type courant et particulièrement une motorisation électrique.

Le choix des dimensions 6a, 6b et l'engrenage 7 sera fonction de la vitesse du mouvement d'oscillation à obtenir partant de la vitesse angulaire nominale de la motorisation 8.

L'utilisation de roues dentées 6a, 6b engrenant à l'avantage de créer facilement une mise en mouvement parfaitement symétrique des deux parties mobiles 2a, 2b.

Pour permettre un bon enchaînement des phases d'ouverture et de fermeture de la chambre d'extraction 16, on utilisera préférentiellement au moins un capteur de position du déplacement angulaire des roues dentées 6a, 6b. On peut ainsi enchaîner, de façon automatique, les phases de mouvement en fonction de la position angulaire atteinte.

Dans un autre mode particulier de réalisation, le dispositif 1 comprend au moins un capteur de présence 19 d'une pastille ou dosette 18 en position de chargement. Un tel capteur de présence, notamment constitué d'une cellule photoélectrique, peut être positionnée comme représenté en figures 1 et 3. Il détecte l'introduction d'une dosette 18 en position d'attente pour mettre en ouvre les phases de chargement, d'extraction du café et d'évacuation de la dosette 18.

Dans le mode particulier illustré aux figures, les parties mobiles 2a, 2b sont constituées de deux pièces principales.

D'une part, elles comportent un support mobile référencé 20sur les dessins. Le support 20 est l'élément coopérant directement avec l'arbre à excentrique 3a, 3b. C'est donc lui qui entraîne le reste des éléments constitutifs de la partie mobile 2a, 2b dans son mouvement d'oscillation et de déplacement horizontal.

Chaque partie mobile 2a, 2b comporte par ailleurs dans ce mode de réalisation une pièce escamotable apte à être montée sur le support mobile 20. Pour la partie mobile 2a comportant l'entrée d'eau 13, cette pièce escamotable est un porte douchette 21. Pour la partie mobile 2b comportant une évacuation de café 17, la pièce escamotable est constituée par un porte filtre.

Comme détaillé aux figures 10 à 13, le porte filtre ou le porte douchette 21 peut être inséré sur le support mobile 20 au niveau d'un évidemment 15 constitué sur celui-ci.

Par ailleurs, un moyen de pression 22 telle une bille d'appui montée sur ressort peut être utilisée pour renforcer la liaison du porte douchette ou porte filtre sur le support mobile 20.

D'autres modes de montage sont cependant dans le cadre de l'invention.

On donne ci-après un exemple des déplacements opérés par les parties mobiles 2a, 2b dans les différents états de configuration de la chambre d'extraction 16.

Comme représenté en figure 4, on part d'une position ouverte vers le bas de la chambre d'extraction 16. De cette façon, l'évacuation d'une dosette 18 précédente peut être effectuée ainsi que la mise en attente d'une dosette 18 introduite verticalement par le haut du dispositif.

Lors de cette introduction de la dosette 18, un état de présence du capteur de présence 19 est activé pour enchaîner les phases de mouvements des parties mobiles 2a, 2b.

L'information de présence déclenche la motorisation 8 permettant, par le biais des arbres à excentrique 3a, 3b d'effectuer un mouvement d'oscillation des parties mobiles 2a, 2b de façon à amener la chambre d'extraction 16 en position ouverte vers le haut tel que représenté en figure 6. Une phase intermédiaire est également illustrée en figure 5. Cette phase d'oscillation pure se termine lorsque les parties mobiles 2a, 2b viennent en butée sur les surfaces de butée qui s'appellent 12a, 12b.

Durant cette étape, la dosette 18, notamment par simple gravité, pénètre dans la chambre d'extraction 16. Les surfaces de butée 12a, 12b provoquent alors une limitation du déplacement angulaire. La puissance de motorisation permet alors de s'opposer à la résistance du frein de la liaison pivot 5. Il s'ensuit un déplacement de l'arbre à excentrique 3a, 3b relativement aux parties mobiles 2a, 2b de façon à modifier la position de l'excentrique. Tel que représenté en figure 5, l'excentrique 3a, 3b passe d'une position où les parties mobiles sont éloignées au maximum à une position où elles sont rapprochées au maximum comme en figure 7. Cette phase de rapprochement s'effectue ici par une mise en rotation de la motorisation depuis la phase d'attente de chargement d'une dose 18 tel que représenté en figure 1 jusqu'à la phase de fermeture de la chambre d'extraction 16 telle que représentée en figure 3.

Il est à noter que les mouvements opérés jusqu'alors s'effectuent de façon continue aux moyens d'une seule motorisation.

La chambre d'extraction 16 est alors en position fermée, comme en figure 7, ce qui permet l'opération de lixiviation forcée ou d'extraction du café. Un capteur de position permet de déterminer la fin de fermeture de la chambre d'extraction 16 pour lancer l'opération d'extraction.

Lorsque cette extraction est finalisée, la motorisation 8 est actionnée en sens inverse des phases précédentes pour procéder à l'ouverture de la chambre d'extraction 16 vers le bas. Cette phase d'ouverture peut débuter par un mouvement d'oscillation pure jusqu'à ce que les parties mobiles 2a, 2b viennent, par leur partie supérieure, en butée sur les surfaces de butée 12a, 12b. S'ensuit alors un déplacement inverse de l'arbre à excentrique 3a, 3b vis à vis de la phase de fermeture. Finalement, les parties mobiles 2a, 2b sont ramenées dans leur configuration initiale à savoir l'attente d'une dosette 18 introduite verticalement.

Cette étape est illustrée en figures 8 et 9.

Néanmoins, durant cette phase d'ouverture vers le bas, la dosette usagée 18 peut être évacuée. Cette évacuation peut s'effectuer par simple gravité.

On peut favoriser une bonne évacuation de la dosette 18 usagée notamment par le biais des moyens de guidage 10 maintenant la dosette 18 verticale et évitant qu'elle ne colle sur l'une ou l'autre des parties mobiles 2a, 2b. On peut également mettre en oeuvre des moyens spécifiques présents au niveau de chaque partie mobile 2a, 2b tels que des doigts d'éjection au niveau de la douchette ou du filtre.

L'invention qui vient d'être décrite permet le passage de la chambre d'extraction 16 entre diverses configurations au moyen d'une seule motorisation. Cette motorisation est par ailleurs très facile à mettre en oeuvre car possiblement constituée par un simple moteur électrique. Toute utilisation de vérins ou autres moyens purement translatifs est évitée. Par ailleurs, l'enchaînement des phases est simplifié puisque seulement un ou deux capteurs de position permet de détecter les phases d'ouverture et de fermeture de la chambre d'extraction 16 en fonction de la rotation angulaire opérée.

### REFERENCES

1. Dispositif
2a. Partie mobile
2b. Partie mobile
3a. Arbre à excentrique
3b. Arbre à excentrique
4. Armature
5. Liaison pivot freinée
6a. Roue dentée
6b. Roue dentée
7. Engrenage
8. Motorisation
9. Plan de contact
10. Moyens de guidage
11. Rainure
12a. Surface de butée
12b. Surface de butée
13. Entrée eau
14. Douchette
15. Evidement
16. Chambre d'extraction
17. Evacuation café
18. Dosette
19. Capteur de présence
20. Support mobile
21. Porte douchette
22. Moyen de pression
23. Patin de friction
24. Ressort
25. Cage de ressort

## Revendications

1. Dispositif (1) pour l'extraction de café, comportant une chambre d'extraction (16) du type à alimentation par introduction verticale de pastilles ou dosettes (18) pré-dosées en café moulu, ladite chambre d'extraction (16) étant composée de deux parties mobiles (2a, 2b) dans un mouvement horizontal de manière à pouvoir s'écarter ou se rapprocher l'une de l'autre, l'une des parties mobiles comportant une entrée d'eau chaude (13), l'autre partie mobile étant dotée d'une évacuation du café (17) extrait **caractérisé par le fait**
**que**
- les parties mobiles (2a, 2b) sont montées chacune sur un arbre à excentrique (3a, 3b) apte à leur transmettre des mouvements oscillatoires de sens inverses,
- et, **qu'**il comporte une liaison pivot freinée (5) entre chaque arbre à excentrique (3a, 3b) et chaque partie mobile (2a, 2b),
afin de combiner un mouvement horizontal et un mouvement d'oscillation pour l'enchaînement des phases d'ouverture et de fermeture de la chambre d'extraction (16).

2. Dispositif (1) selon la revendication 1, **caractérisé par le fait**
**qu'**il comprend des surfaces de butée (12a, 12b) sur lesquelles les parties mobiles (2a, 2b) viennent en appui, permettant d'en limiter l'angle d'oscillation.

3. Dispositif (1) selon l'une quelconque des revendications 1 ou 2, **caractérisé par le fait**
**qu'**il présente des moyens de guidage (10) de la dosette (18) pour la maintenir sensiblement en position verticale.

4. Dispositif (1) selon les revendications 2 et 3, **caractérisé par le fait**
**que** les moyens de guidage (10) constituent également les surfaces de butée (12a, 12b).

5. Dispositif (1) selon l'une quelconque des revendications 3 ou 4, **caractérisé par le fait**
**que** les moyens de guidage (10) sont formés de deux éléments rainurés verticalement pour coopérer avec la périphérie de la dosette (18) et positionnés de part et d'autre des parties mobiles (2a, 2b) sensiblement au niveau de leur plan de contact (9).

6. Dispositif (1) selon l'une quelconque des revendications 1 à 5 **caractérisé par le fait**
**que** la liaison pivot (5) est freinée par un patin de friction (23) porté par chaque partie mobile (2a, 2b) et s'appuyant élastiquement sur la périphérie de l'arbre à excentrique (3a, 3b).

7. Dispositif (1) selon la revendication 2 en combinaison avec l'une quelconque des autres revendications **caractérisé par le fait**
**que** les surfaces de butée (12a, 12b) engendrent le mouvement relatif partie mobile (2a, 2b)/arbre à excentrique (3a, 3b) de la liaison pivot (5) freinée afin de rapprocher les parties mobiles (2a, 2b) lorsqu'elles ont atteint leur déplacement angulaire maximal.

8. Dispositif (1) selon l'une quelconque des revendications 1 à 7 **caractérisé par le fait**
**que** les arbres à excentrique (3a, 3b) sont mus par des roues dentées (6a, 6b) engrenant et motorisées, aptes à transmettre aux parties mobiles (2a, 2b) des mouvements symétriques par rapport à leur plan de contact (9).

9. Dispositif (1) selon l'une quelconque des revendications 1 à 8 **caractérisé par le fait**
**que** les parties mobiles (2a, 2b) comportent chacune un support mobile (20) monté sur l'arbre à excentrique (3a, 3b) et, l'une un porte douchette (21), l'autre un porte filtre, escamotables et montés sur le support mobile (20).

10. Dispositif (1) selon la revendication 8 en combinaison avec l'une quelconque des autres revendications **caractérisé par le fait**
**qu'**il comprend au moins un capteur de position apte à déterminer la position angulaire des roues dentées (6a, 6b).

11. Dispositif (1) selon la revendication 3 en combinaison avec l'une quelconque des autres revendications **caractérisé par le fait**
**qu'**il comporte au moins un capteur de présence (19) d'une pastille (18) en position chargement.

12. Dispositif (1) selon l'une quelconque des revendications 1 à 11 **caractérisé par le fait que**
- partant d'une position angulaire maximale où la chambre d'extraction (16) est ouverte vers le bas, les arbres à excentrique (3a, 3b) effectuent un déplacement angulaire permettant l'ouverture de la chambre d'extraction (16) vers le haut pour l'introduction d'une dosette (18),
- les arbres à excentrique (3a, 3b) poursuivent leur déplacement angulaire pour la fermeture de la chambre d'extraction (16)
- les arbres à excentrique (3a, 3b) effectuent ensuite un déplacement angulaire de sens inverse pour ramener la chambre d'extraction (16) en position ouverte vers le bas pour l'évacuation de la dosette usagée et l'attente du chargement d'une nouvelle dosette (18).

## Claims

1. Device (1) for coffee extraction, comprising an extraction chamber (16) of the type with vertical insertion of pre-proportioned pellets or doses (18) of ground coffee, the aforementioned extraction chamber (16) comprising two parts (2a, 2b) moving horizontally so as to separate or approach one another, one of the moving parts comprising a hot water inlet (13), the other moving part being equipped with a discharge for the extracted coffee (17) **characterized in that**
- each moving part (2a, 2b) is assembled on an eccentric shaft (3a, 3b) able to transmit opposite direction oscillatory movements to them,
- and that it comprises a braked pivot connector (5) between each eccentric shaft (3a, 3b) and each moving part (2a, 2b), in order to combine a horizontal movement and an oscillatory movement for linking the extraction chamber (16) opening and closing phases.

2. Device (1) according to claim 1, **characterized in that**
it includes stop surfaces (12a, 12b) on which the moving parts (2a, 2b) bear, so as to limit its angle of oscillation.

3. Device (1) according to any one of claims 1 or 2, **characterized in that** it presents means for guidance (10) of the dose (18) in order to maintain it appreciably in the vertical position.

4. Device (1) according to claims 2 and 3, **characterized in that** the guidance means (10) also constitute the stop surfaces (12a, 12b).

5. Device (1) according to any one of claims 3 or 4, **characterized in that** the guidance means (10) are made of two elements vertically grooved to act with the periphery of the dose (18) and positioned on either side of the mobile parts (2a, 2b) roughly at the level of their contact plane (9).

6. Device (1) according to any of claims 1 to 5 **characterized in that** the pivot connector (5) is braked by a friction shoe (23) carried by each moving part (2a, 2b) and bearing elastically on the periphery of the eccentric shaft (3a, 3b).

7. Device (1) according to claim 2 in combination with any one of the other claims **characterized in that**
the surfaces of the stop (12a, 12b) generate the relative movement of the moving part (2a, 2b)/eccentric shaft (3a, 3b) of the braked pivot connector (5) in order to bring the moving parts closer (2a, 2b) when they reached their maximum angular displacement.

8. Device (1) according to any one of the claims 1 to 7 **characterized in that**
the eccentric shafts (3a, 3b) are driven by gearing and motorized toothed wheels (6a, 6b) able to transmit symmetrical movements to the moving parts (2a, 2b) relative to their contact plane (9).

9. Device (1) according to any one of the claims 1 to 8 **characterized in that**
each moving part (2a, 2b) comprises a mobile support (20) assembled on the eccentric shaft (3a, 3b) and, one a spray holder (21), the other a filter holder, retractable and fitted on the mobile support (20).

10. Device (1) according to claim 8 in combination with any one of the other claims **characterized in that**
it includes at least one position sensor capable of determining the angular position of the toothed wheels (6a, 6b).

11. Device (1) according to claim 3 in combination with any one of the other claims **characterized in that**
it comprises at least one pellet (18) presence detector (19) in the loaded position.

12. Device (1) according to any one of the claims 1 to 11 **characterized in that**
- from a maximum angular position where the extraction chamber (16) is open towards the bottom, the eccentric shafts (3a, 3b) perform an angular displacement allowing the upward opening of the extraction chamber (16) ready for the introduction of a dose (18),
- the eccentric shafts (3a, 3b) continue their angular displacement in order to close the extraction chamber (16)
- the eccentric shafts (3a, 3b) then perform an opposite direction angular displacement to bring back the extraction chamber (16) in the open position downwards so that the used dose is evacuated and ready for loading a new dose (18).

## Patentansprüche

1. Vorrichtung (1) zur Extraktion von Kaffee bestehend aus einer Extraktionskammer (16), die von oben mit Tabletten oder Kapseln (18) beschickt wird, die mit einer festgelegten Dosis gemahlenes Kaffees gefüllt sind, und die aus zwei beweglichen Teilen (2a, 2b) besteht, die sich in einer waagerechten Bewegung voneinander entfernen oder sich einander annähern können, wobei eines der beweglichen Teile eine Warmwasserzufuhrfeitung (13) und der andere bewegliche Teil einen Ausstoß für den extrahierten Kaffee (17) besitzt, **gekennzeichnet dadurch,**
- **dass** jedes der beweglichen Teile (2a, 2b) auf einer Exzenterwelle (3a, 3b) montiert ist, die sie in eine gegenläufige Drehbewegung versetzen,
- und **dass** ein gebremstes Gelenk (5) zwischen jeder Exzenterwelle (3a, 3b) und jedem beweglichen Teil (2a, 2b) vorhanden ist,
um die waagerechte Bewegung mit einer Drehbewegung zu kombinieren und so die Öffnungs- und Schließphasen der Extraktionskammer (16) zu steuern.

2. Vorrichtung (1) gemäß Anspruch 1, **gekennzeichnet dadurch,**
**dass** sie Anschlagflächen (12a, 12b) besitzt, an welche sich die beweglichen Teile anlegen, um den Drehwinkel zu begrenzen.

3. Vorrichtung (1) nach einem der vorstehenden Ansprüche 1 oder 2, **gekennzeichnet dadurch,**
**dass** sie Führungselemente (10) für die Kapseln (18) besitzt, um diese in annähernd senkrechter Position zu halten.

4. Vorrichtung (1) gemäß Anspruch 2 und 3, **gekennzeichnet dadurch, dass** die Führungsmittel (10) gleichzeitig die Anschlagflächen (12a, 12b) darstellen.

5. Vorrichtung (1) gemäß einem der Ansprüche 3 oder 4, **gekennzeichnet dadurch,**
**dass** die Führungselemente (10) aus zwei, mit senkrechten Nuten versehenen Elementen bestehen, die mit dem Umfang der Kapsel (18) zusammenwirken und zu jeder Seite der beweglichen Teile (2a, 2b) et etwa auf Höhe ihrer Anschlagfläche (9) angeordnet sind.

6. Vorrichtung (1) gemäß einem der Ansprüche 1 bis 5, **gekennzeichnet dadurch,**
**dass** die Gelenkverbindung (5) durch einen Reibschuh (23) gebremst wird, der an jedem beweglichen Teil (2a, 2b) vorgesehen ist und sich elastisch an den Umfang der Exzenterwelle (3a, 3b) anlegt.

7. Vorrichtung (1) gemäß Anspruch 2, in Kombination mit irgend einem der anderen Ansprüche, **gekennzeichnet dadurch,**
**dass** die Anschlagflächen (12a, 12b) die Relativbewegung zwischen dem beweglichen Teil (2a, 2b) und der Exzenterwelle (3a, 3b) der gebremsten Gelenkverbindung (5) einleiten, um die beweglichen Teile (2a, 2b) zusammen zu führen, wenn diese die maximale Winkelposition erreicht haben.

8. Vorrichtung (1) gemäß einem der Ansprüche 1 bis 7, **gekennzeichnet dadurch, dass** die Exzenterwellen (3a, 3b) von motorisierten Zahnrädern (6a, 6b) angetrieben werden, die in der Lage sind, die beweglichen Teile (2a, 2b) in eine symmetrische Bewegungen in bezug auf ihre Anschlagfläche (9) zu versetzen.

9. Vorrichtung (1) gemäß einem der Ansprüche 1 bis 8, **gekennzeichnet dadurch, dass** jedes der beweglichen Teile (2a, 2b) eine auf der Exzenterwelle (3a, 3b) montierte bewegliche Halterung (20) besitzt, und dass ein Brausensitz (21) auf der einen und ein Filtersitz auf der anderen beweglichen Halterung (20) schwenkbar montiert sind.

10. Vorrichtung (1) gemäß Anspruch 8 in Kombination mit irgendeinem der anderen Ansprüche, **gekennzeichnet dadurch,**
**dass** sie mindestens einen Positionsgeber zur Ermittlung der Winkelposition der Zahnräder (6a, 6b) besitzt.

11. Vorrichtung (1) gemäß Anspruch 3 in Kombination mit irgendeinem der anderen Ansprüche, **gekennzeichnet dadurch,**
**dass** sie mindestens einen Anwesenheitsgeber (19) besitzt, der das Vorhandensein einer Tablette (18) in der Ladeposition detektiert.

12. Vorrichtung (1) gemäß irgendeinem der Ansprüche 1 bis 11, **gekennzeichnet dadurch, dass**,
- ausgehend von der maximalen Winkelposition, in der die Extraktionskammer (16) nach unten offen ist, die Exzenterwellen (3a, 3b) eine Drehbewegung ausführen, durch die sich die Extraktionskammer (16) nach oben öffnet, um das Einführen einer Kapsel (18) zu ermöglichen,
- die Exzenterwellen (3a, 3b) ihre Winkelbewegung fortsetzen, um die Extraktionskammer (16) zu schließen,
- die Exzenterwellen (3a, 3b) anschließend eine Drehbewegung in die entgegengesetzte Richtung ausführen, um die Extraktionskammer (16) in die nach unten geöffnete Stellung zu bringen, um die verbrauchte Kapsel auszuwerfen und zum Einlegen einer neuen Kapsel (18) bereit zu sein.
